# EUROPEAN PATENT APPLICATION

(11) **EP 2 744 082 A1**
(43) Date of publication of application: **18.06.2014**
(21) Application number: 12822752.7
(22) Date of filing: 01.08.2012
(51) Int. Cl.: H02K 3/34

(54) **ROTATING ELECTRICAL MACHINE FOR VEHICLE**

(30) Priority: 08.08.2011 JP 2011172641
(71) Applicant: Aisin Seiki Kabushiki Kaisha, Kariya-shi, Aichi 448-8650 (JP)
(72) Inventor: IWASE, Shogo, Kariya-shi Aichi 448-0027 (JP); KAMIYA, Naoki, Kariya-shi Aichi 448-8650 (JP); MASEGI, Hiroyuki, Kariya-shi Aichi 448-0027 (JP)
(74) Representative: Kramer - Barske - Schmidtchen
(86) International application number: PCT/JP2012/069631
(87) International publication number: WO 2013/021900

(57) **Abstract**

A rotating electrical machine for a vehicle comprises a stator core 10 formed by layering a plurality of electromagnetic steel sheets, a first insulator 21 and a second insulator 22 facing with each other and fitted to the stator from an axial direction of the stator core, and a coil winding 30 formed by resin molding 31 and wound around the first and the second insulators. The first insulator 21 includes a first end portion 23a and a first side wall portion 24a and the second insulator 22 includes a second end portion 23b and a second side wall portion 24b, wherein a gap S1 is formed between the first side wall portion 24a and the second side wall portion 24b and the gap S1 is positioned at a first end portion side or a second end portion side from a middle position M of a layered length H of the stator core 10 in the axial direction and is positioned at a portion of the coil winding 30 where a curvature thereat is larger than a curvature at the middle position M of the stator coil.

## Description

### TECHNICAL FIELD

This invention relates to an insulator used for a rotating electrical machine for a vehicle.

### BACKGROUND OF THE TECHNOLOGY

According to a conventional rotating electrical machine for a vehicle, a pair of insulators is disposed in the rotating electrical machine facing with each other in an axial direction in order to secure the insulation performance between a coil winding and a stator core which is structured by layering a plurality of electromagnetic steel sheets. (For example, refer to Patent Document 1).

### PRIOR ART DOCUMENT

### PATENT DOCUMENT

Patent Document 1: JP2000-50555 A

### DISCLOSURE OF INVENTION

### PROBLEMS TO BE SOLVED

However, the rotating electric machine for the vehicle according to the Patent Document 1 is structured so that each tip end of the insulators is brought into contact with each other so that the stator core is not exposed outside. Accordingly, a highly accurate machining is necessary for manufacturing the insulators and this will lead to an increase of manufacturing cost. Further, due to a deviation in thickness of the electromagnetic steel sheet, a deviation in size in an axial direction of the stator core may occur and a gap is formed between each tip end of the insulators which is brought into contact with each other. Such gap may be provided at a middle position of the stator core in the axial direction which is exposed at the middle position. When the stator core is resin-molded, a portion of the coil winding wound around the middle position of the stator core is pushed by the molding pressure at the resin mold forming and is entered into the gap thereby to generate insulation failure between the stator core and the coil winding.

The present invention was made in consideration with the above drawbacks and the object of the invention is to provide a rotating electrical machine which can prevent insulation failure between the stator core and the coil winding that may be generated by resin molding process not to increase the manufacturing cost of the insulators.

### MEANS FOR SOLVING THE PROBLEM

The structure of the rotating electrical machine associated with a first aspect of this invention made for solving the above problem is characterized in that a rotating electrical machine for a vehicle includes a stator core formed by layering a plurality of electromagnetic steel sheets, a first insulator and a second insulator facing with each other and fitted to the stator core from an axial direction thereof and a coil winding formed by resin molding and wound around the first and the second insulators. The first insulator of the rotating electrical machine according to the invention includes a first base portion which covers one end portion of the stator core in the axial direction and a first extending portion extending towards a second insulator side from the first base portion and the second insulator of the rotating electrical machine according to the invention includes a second base portion which covers the other end portion of the stator core in the axial direction and a second extending portion extending towards a first insulator side from the second base portion, wherein a gap is formed between the first extending portion and the second extending portion and a position of the gap is located at a first base portion side or a second base portion side from a middle position of a length of the stator core in the axial direction and is positioned at a portion of the coil winding where a curvature thereat is larger than a curvature at the middle position of the stator coil.

The structure of the invention associated with a second aspect is characterized in that the position of the gap is arranged at a position closer to the first base portion or the second base portion than the middle position of the stator core.

The structure of the invention associated with a third aspect is characterized in that the portion of the coil winding where the curvature thereat is larger than the curvature at the middle position of the stator coil forms an arc shaped portion of the coil winding to be in contact with a first joint portion between the first base portion and the first extending portion or a second joint portion between the second base portion and the second extending portion.

The structure of the invention associated with a fourth aspect is characterized in that a sum of a length of the first extending portion in the axial direction overlapped with the stator core and a length of the second extending portion in the axial direction overlapped with the stator core is formed to be shorter than the length of the stator core in the axial direction.

The structure of the invention associated with a fifth aspect is characterized in that a shape of the first insulator is the same with a shape of the second insulator.

### THE EFFECTS OF THE INVENTION

According to the rotating electrical machine of the invention, the gap is provided between the first and the second extending portions under the stator core being installed. According to this structure, the first and the second insulators can be manufactured without requiring a high precision work for machining the first and the second extending portions. Thus an increase of manufacturing cost can be prevented or suppressed. Further, according to the invention, the gap formed between the first and the second extending portions is located at the first base portion side or the second base portion side from the middle position of the stator core in the axial direction and is positioned at a portion of the coil winding where an curvature thereof is larger than the curvature thereof at the middle position of the stator coil. Thus the coil winding is shaped to be difficult to be deformed by the molding pressure by resign molding process. The deformation of the coil winding at the portion located at the gap can be deformed and at the same time the entering of the coil winding into the gap can be also prevented not to generate any insulation failure between the coil winding and the stator core.

According to the rotating electrical machine of the invention, the position of the gap is arranged at a position closer to the first base portion or the second base portion than the middle position. Thus the gap can be provided at the position where a greater curvature of the coil winding can be obtained. This can make the coil winding to be difficult to be deformed.

According to the rotating electrical machine of the invention, when the molding pressure is applied on the arc shaped portion of the coil winding to be in contact with the first and the second junction portions, the arc shaped portion receives a moment having a fulcrum arm on the first and the second junction portions by the molding pressure. The molding pressure operating on the arc shaped portion is applied closer to the fulcrum than the molding pressure operating on the middle position of the coil winding and accordingly, the moment received by the arc shaped portion is smaller than the moment received by the middle position of the coil winding. This can make the arc shaped portion to be difficult to be deformed against the molding pressure than the middle position of the coil winding.

According to the invention, the sum of the length of the first extending portion in the axial direction overlapped with the stator core and the length of the second extending portion in the axial direction overlapped with the stator core is formed to be shorter than the total length of the stator core in the axial direction. According to this structure, a gap can be inevitably formed between the first and the second extending portions. Thus the gap can be surely formed between the first and the second extending portions in the axial direction relative to the stator core.

Further, according to the invention, the length of one of the first extending portions is longer than the length of the other one of the first extending portions and the length of one of the second extending portions which opposes to the one of the first extending portions is shorter than the length of the other of the second extending portions which opposes to the other of the first extending portions. Thus, the coil winding positioned at the gap position is not deformed by molding and is prevented from entering into the gap so that the insulation failure can be prevented thereby.

According to the rotating electrical machine of the invention, the first insulator and the second insulator are formed to have the same shape to be able to manufacture only one type to reduce the manufacturing cost comparing to the case of manufacturing two different type insulators.

### BRIEF EXPLANATION OF ATTACHED DRAWINGS

Fig. 1 is a cross sectional view illustrating an electric pump in which a motor portion of the invention is applied;
Fig. 2 is an exploded perspective view of the motor portion according to the invention;
Fig. 3 is a cross-sectional view taken along the line X-X of a first embodiment of the invention; and
Fig. 4 is a cross-sectional view taken along the line X-X of a second embodiment of the invention.

### THE PREFERRED EMBODIMENTS OF THE INVENTION

### [First Embodiment]

A first embodiment of the invention will be explained hereinafter in detail with reference to the attached drawings.

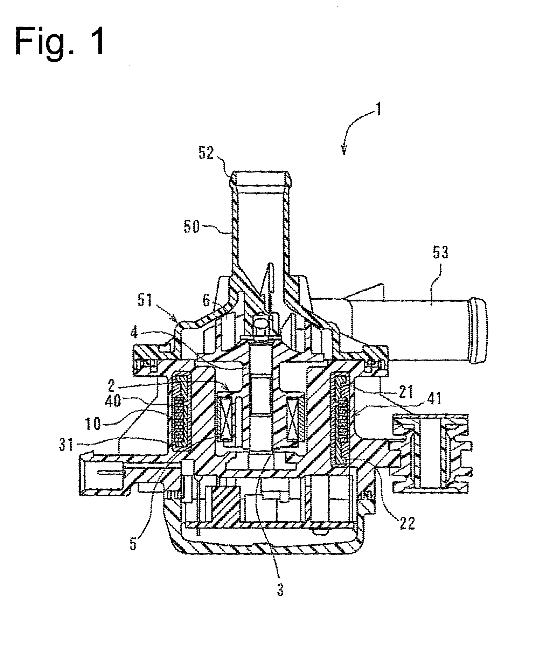

Fig. 1 is a cross-sectional figure of an electric pump 1 using a motor portion 41 (rotating electrical machine for vehicle) of the invention. The electric pump 1 is provided with the motor portion 41 and a pump portion 51 and a pump casing 50 which defines the outer profile of the pump portion 51 and a motor casing 40 which defines the outer profile of the motor portion 41 are integrally assembled. The motor portion 41 includes a rotor 2, a stator core 10, a first insulator 21, a second insulator 22 and the motor casing 40. The rotor 2 is provided with a rotor main body 3 and a permanent magnet 5 attached on the outer peripheral portion of the rotor main body 3. The rotor 2 is integrally formed with a rotation shaft 4 so that an axis of a rotation shaft of the rotor main body 3 agrees with an axis of the rotation shaft 4. The rotor 2 and an impeller 6 are integrally formed on the rotation shaft 4 so that the rotor 2 and the impeller 6 are integrally rotatable with the rotation shaft 4. The first and the second insulators 21 and 22 are fitted to the stator core 10. A resin molding 31 is formed from the outside of the first and the second insulators 21 and 22. The impeller 6 is freely rotatably housed in the pump portion 51 and when the impeller 6 is rotated by the motor portion 41, the fluid is suctioned from a suction port 52 formed on the pump casing 50 and the suctioned fluid is ejected from an ejection port 53.

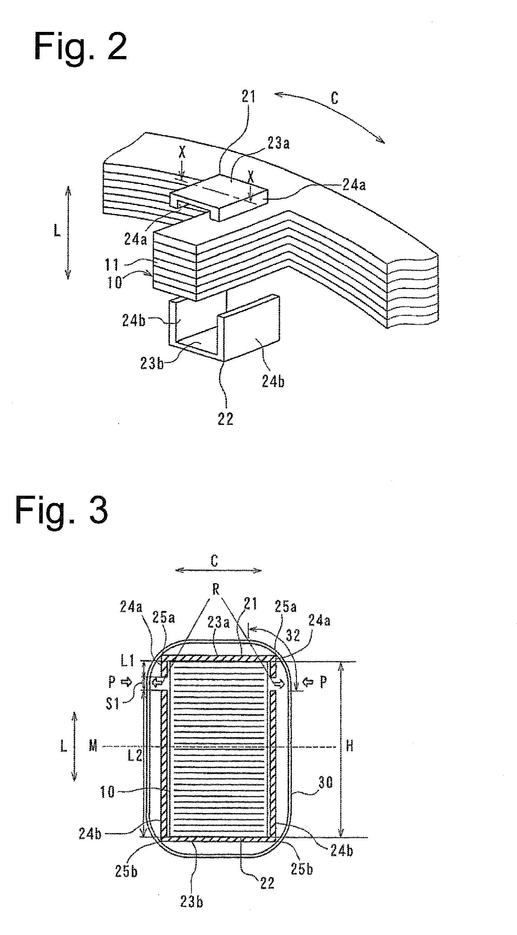

Fig. 2 is an exploded perspective view of the stator core 10 and the first and the second insulators 21 and 22. The stator core 10 is formed by layering a plurality of magnetic steel sheets 11 from an axial direction L of the stator core 10, in which direction the height of the stator core increases. The first and the second insulators 21 and 22 are oppositely fitted to the stator core 10 from the axial direction L. The first insulator 21 includes a first end portion 23a (first base portion) which covers an end portion of the stator core 10 in the axial direction L and a first side wall portion 24a (first extending portion) which is consecutively joined at the first end portion 23a at both sides in a peripheral direction C of the first end portion 23a and is extending towards the second insulator 22 side. The second insulator 22 includes a second end portion 23b (second base portion) which covers the end portion of the stator core 10 in the axial direction L and a second side wall portion 24b (second extending portion) which is consecutively joined at the second end portion 23b at both sides in the peripheral direction C of the second end portion 23b and is extending towards the first insulator 21 side. The width in the peripheral direction C of the first side wall portion 24a and the width in the peripheral direction C of the second side wall portion 24b are set to be equal. Polyphenylene sulfide resin is used for the raw material forming the first and the second insulators 21 and 22. In addition to such raw material for forming the first and the second insulators 21 and 22 PA 66 Nylon may be used.

Fig. 3 explains a coil winding 30 at the molding process using the cross sectional view taken along the line X-X in Fig. 2. The first and the second insulators 21 and 22 are fitted to the stator core 10 oppositely to each other along in the axial direction L. The length in axial direction L of the first side wall portion 24a of the first insulator 21 is defined to be the length L1 (length of the first extending portion in an axial direction). Similarly, the length in axial direction L of the second side wall portion 24b of the second insulator 22 is defined to be the length L2 (length of the second extending portion in an axial direction). The relationship between the sum of the length L1 and the length L2 and the layered length (height) H of the stator core 10 (length of the stator core in an axial direction) can be represented as H > L1 + L2. According to this structure, the gap S1 is formed between the first side wall portion 24a and the second side wall portion 24b. The axial length of the gap S1 in the axial direction L is set to be the value of 0.7±0.7mm. Further, the length L2 of the second side wall portion in the axial direction L is set so that the second side wall portion 24b can cover the middle position M of the layered height H of the stator core 10. The position of the gap S1 is located at the first end portion 23a side with respect to the middle position M of the height H and is closer to the first end portion 23a than the middle position M. Further, the gap S1 is formed on the arc shaped portion 32 of the coil winding 30 in the peripheral direction C by contacting the first joint portion 25a connecting the first end portion 23a and the first side wall portion 24a and the second joint portion 25b connecting the second end portion 23b and the second side wall portion 24b. The arc shaped portion 32 is formed so that the curvature thereat is larger than the curvature at a portion of the coil winding wound around the middle position M. The stator core 10 is resin-molded 31 with the coil winding 30 being wound thereabout through the first and the second insulators 21 and 22 to apply molding pressure P to the coil winding 30 from the outer periphery side towards the stator core side. A compression stress R is generated inside of the coil winding 30 against the molding pressure P.

The operation of the coil winding 30 after the motor portion 41 being resin-molded will be explained hereinafter with reference to Fig. 3.

The insulating structure by the first and the second insulators 21 and 22 is formed by facing the first and the second insulators 21 and 22 oppositely to each other and fitting to the stator core 10. After the insulators 21 and 22 are fitted to the stator core 10, the gap S1 is formed between the first side wall portion 24a and the second side wall portion 24b. The position of the gap S1 is located at the first end portion 23a side with respect to the middle position M of the height H and is closer to the first end portion 23a than the middle position M. The gap S1 is formed on the arc shaped portion 32 of the coil winding 30 in the peripheral direction C and the coil winding 30 is wound around the stator core 10 by contacting the first joint portion 25a and the second joint portion 25b through the first end portion 23a and the second end portion 23b and the first side wall portion 24a and the second side wall portion 24b. The stator core 10 is resin-molded 31 with the coil winding 30 being wound thereabout through the first and the second insulators 21 and 22 to apply molding pressure P to the coil winding 30 from the outer periphery side towards the stator core side. The compression stress R is generated inside of the coil winding 30 against the molding pressure P. Since the curvature of the arc shaped portion 32 is larger than the portion of the coil winding 30 at the middle position M, the compression stress R applied on the arc shaped portion 32 is greater than the compression stress applied on the portion at the middle position M. Accordingly, it is difficult to be deformed against the molding pressure P at the arc shaped portion 32 compared to the portion at the middle position M. Further, the molding pressure P is applied on the arc shaped portion 32 from the position closer to the first or the second joint portion 25a or 25b as the fulcrum point than the position where the molding pressure P is applied on the middle position M. Accordingly, the moment that the molding pressure P is applied on the arc shaped portion 32 becomes smaller than the moment that the molding pressure is applied on the portion at the middle position M. This will cause the arc shaped portion to be difficult to be deformed against the molding pressure P compared to the portion of the coil winding 30 at the middle position M.

According to the embodiment of the invention explained above, the effects and advantages of the embodiment can be obtained, which will be explained hereinafter.

(1) According to the embodiment, the gap S1 is formed between the first and the second side wall portions 24a and 24b under the first and the second insulators 21 and 22 being fitted to the stator core 10. According to this structure, a highly precise machining is not necessary for the first and the second side wall portions 24a and 24b. This can prevent increase of manufacturing cost. Further, the gap S1 is provided between the first and the second side wall portions 24a and 24b and positioned at the first end portion 23a side or the second end portion 23b side, deviated from the middle position M of the stator core 10. The curvature of the coil winding 30 facing to the gap S1 is larger than the curvature thereof facing to the middle position M of the stator core 10. Since the curvature of the coil winding 30 at the first end portion 23a side or the second end portion 23b side is larger than the curvature thereof at the middle position M and accordingly the coil winding 30 at the position off the middle position M is difficult to be deformed against the molding pressure P. therefore, the coil winding 30 is prevented from deforming and entering into the gap S1 and accordingly the insulation failure due to undesirable contact between the coil winding 30 and the stator core 10 can be prevented which may be caused by the deformation of the coil winding 30.

(2) According to the embodiment, since the gap S1 is provided off the middle position M of the stator core 10 closer to either the first end portion 23a or the second end portion 23b, the gap S1 can be formed facing to the coil winding 30 at a position where the coil winding exhibits a larger curvature. In other words, the gap S1 can be formed at a position where the coil winding 30 is difficult to be deformed by the molding pressure P.

(3) According to the embodiment, when the molding pressure P is applied to the arc shaped portion 32 of the coil winding 30 which is in contact with the first and the second joint portions 25a and 25b, a moment having a fulcrum at the first and the second joint portions 25a and 25b is generated by the molding pressure P and applied on the arc shaped portion 32. The arc shaped portion 32 on which the molding pressure P is applied is situated closer to the fulcrum point than the middle position M of the coil winding 30 on which the molding pressure is applied and therefore, the moment of force operated on the arc shaped portion is smaller than the moment force operated on the middle position M of the coil winding 30. Accordingly, the arc shaped portion 32 is hard to be deformed compared to the middle position M of the coil winding 30 against the molding pressure P.

(4) According to the embodiment, the sum of the length L1 of the first side wall portion 24a and the length L2 of the second side wall portion 24b is set to be shorter than the layered height (length) H of the stator core 10. Accordingly, the gap S1 is inevitably provided between the first side wall portion 24a and the second side wall portion 24b in an axial direction L.

### (Second embodiment)

The second embodiment of the invention will be explained hereinafter with refer4ence to the attached drawings. It is noted here that the main difference between the first and the second embodiments is that the shapes of the first and the second insulators 21 and 22 of the second embodiment are different from those of the first embodiment, and therefore, the detail description of the same or common portions of the second embodiment will be omitted.

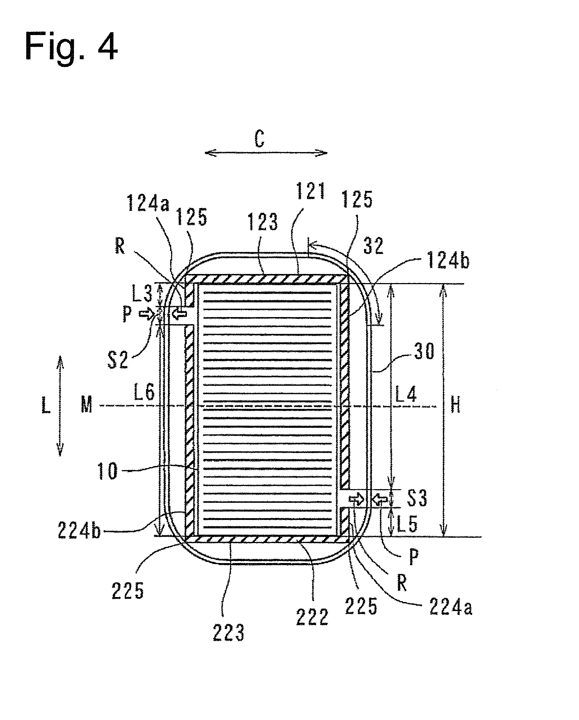

Fig. 4 is a cross section view of the second embodiment taken along the line X-X corresponding to the view shown in Fig. 3. The first and the second insulators 121 and 222 of this embodiment are fitted into the stator core 10 in the axial direction L and are facing with each other. The first insulator 121 has a first shorter side wall portion 124a having an axial length L3 and a second longer side wall portion 124b having an axial length L4 in the axial direction L. The second insulator 222 has a second shorter side wall portion 224a having an axial length L5 and a second longer side wall portion 224b having an axial length L6 in the axial direction L. Both the first and the second insulators 121 and 222 are formed to be identical shape and the lengths L3 and L5 in axial direction L are equal and the lengths L4 and L6 in the axial direction L are equal (L3=L5, L4=L6).

In other words, the first insulator 121 has two first extending portions (first shorter side wall portion 124a and first longer side wall portion 124b) and the second insulator 222 has two second extending portions (second shorter side wall portion 224a and second longer side wall portion 224b). One (124b) of the two first extending portions (124a and 124b) is longer than the other (124a) of the two first extending portions (L3<L4). One (224a) of the two second extending portions (224a and 224b) facing to the one (124b) of the two first extending portions is shorter than the other (224b) of the two second extending portions (224a and 224b) facing to the other (124a) of the two first extending portions (L5<L6).

Under the first and the second insulators 121 and 222 being fitted into the stator core 10, the gaps S2 and S3 are formed. The gap S2 is formed between the first shorter side wall portion 124a and the second longer side wall portion 224b in the axial direction L and the gap S3 is formed between the first longer side wall portion 124b and the second shorter side wall portion 224a. The length of the insulators 121 and 222 in the axial direction L and the height H of the stator core 10 are indicated as the formulae "H>L3+L6" and "H>L4+L5". This means that the gaps S2 and S3 are inevitably formed. Both lengths of the gaps S2 and S3 in the axial direction L are set to be 0.7±0.7mm. The length L4 is set to be the length that the first longer side wall portion 124b can cover the middle position M of the layered height H of the stator core. Thus the gap S3 is positioned at the second end 223 portion side from the middle position M and is closer to the second end portion 223 side than the middle position M. Further, the gaps S2 and S3 are formed on the arc shaped portion 32 in the peripheral direction C.

The operation of the coil winding 30 molded with the motor portion 41 will be explained hereinafter with reference to Fig. 4.

As shown in Fig. 4, the insulating structure is formed by the first insulator 121 and the second insulator 222 fitted in, facing with each other in the axial direction L. When the fitted first and the second insulators 121 and 222 are installed to the stator core 10, the gap S2 is formed between the first shorter side wall portion 124a and the second longer side wall portion 224b and the gap S3 is formed between the first longer side wall portion 124b and the second shorter side wall portion 224a. These gaps S2 and S3 are positioned on the arc shaped portion 32 of the coil winding 30 in the peripheral direction C. The coil winding 30 is wound around on the stator core 10, being in contact with the first joint portion 125 and the second joint portion 225 through the first and the second end portions 123 and 223, the first shorter side wall portion 124a and the first longer side wall portion 124b and the second shorter side wall portion 224a and the second longer side wall portion 224b. By resin-molding 31, the molding pressure P is applied on the coil winding 30 from the outer peripheral side towards the stator core 10 side. The compression stress R is generated and applied on the arc shaped portion 32 against the molding pressure P from the gaps S2 and S3 in the peripheral direction C. The curvature of the coli winding 30 at the arc shaped portion 32 is larger than that at the middle position M and accordingly, the compression stress R working on the arc shaped portion 32 is larger than the compression stress R working on the middle position of the coil winding 30. In other words, the arc shaped portion 32 is hard to be deformed by the molding pressure P compared to the middle position M of the coil winding 30. Further, the middle position M is closer to the first or the second joint portion 125 or 225 which serves as the fulcrum when the pressure P is applied than the arc shaped portion 32 and accordingly, the moment when the pressure P is applied is smaller at the arc shaped portion 32 than at the middle position M. In this meaning, too, the arc shaped portion 32 is hard to be deformed than at the middle position M against the pressure P.

As explained above, according to the second embodiment, the following advantages and effects are obtained in addition to those (1) through (4) in the first embodiment.

(5) According to this second embodiment, the shape of the first insulator 121 is identical with the shape of the second insulator 222, and accordingly only one type insulator may be manufactured, different from the case in the first embodiment, where the two different shaped insulators are used. Thus, the manufacturing cost can be reduced further compared to the first embodiment.

As explained, the shapes of the first and the second insulators are identical in the second embodiment, but the invention is not limited to this type. For example, it may not be necessary to manufacture the identical shape insulators as long as the first insulator 121 may include two first extending portions (first shorter side wall portion 124a and the first longer side wall portion 124b) and the second insulator 222 may include two second extending portions (second shorter side wall portion 224a and the second shorter side wall portion 224b) and one (124b) of the two first extending portions is longer than the other (124a) of the two first extending portions (L3<L4) and one (224a) of the two second extending portions facing to the one (124b) of the two first extending portions is shorter than the other (224b) of the two second extending portions facing to the other (124a) of the two first extending portions (L5<L6). In this case the advantages described in the item (5) above cannot be obtained but the advantages described in the items (1) through (4) can be obtained.

### INDUSTRIAL APPLICABILITY

The rotating electrical machine according to the present invention is adaptable to a rotating electrical machine used for a vehicle which may cause a malfunction in insulating between the stator core and the coil winding formed by resin-molding.

### EXPLANATION OF REFERENCE NUMERALS

1; electric pump, 10; stator core, 11; electromagnetic steel sheet, 21; first insulator, 22; second insulator, 23a, 123; first end portion (first base portion), 23b, 223; second end portion (second base portion), 24a; first side wall portion (first extending portion), 24b; second side wall portion (second extending portion), 25a, 125; first joint portion, 25b, 225; second joint portion, 30; coil winding, 31; resin molding, 32; arc shaped portion, 41; motor portion (rotating electrical machine for vehicle), 124a; first shorter side wall portion, 124b; first longer side wall portion, 224a; second shorter side wall portion, 224b; second longer side wall portion, L; axial direction, C; peripheral direction, S1, S2, S3; gap, L1; length of the first side wall portion (the length of the first extending portion in the axial direction) L2; length of the second side wall portion (the length of the second extending portion in the axial direction) L3; length of the first shorter side wall portion, L4; length of the first longer side wall portion, L5; length of the second shorter side wall portion, L6; length of the second longer side wall portion, H; length of the accumulated layers (length of the stator core in the axial direction), P; molding pressure, R; compression stress and M; middle position.

## Claims

1. A rotating electrical machine for a vehicle comprising:
a stator core formed by layering a plurality of electromagnetic steel sheets;
a first insulator and a second insulator facing with each other and fitted to the stator core from an axial direction thereof; and
a coil winding formed by resin molding and wound around the first and the second insulators, wherein the first insulator includes;
a first base portion which covers one end portion of the stator core in the axial direction; and
a first extending portion extending towards a second insulator side from the first base portion and the second insulator includes;
a second base portion which covers the other end portion of the stator core in the axial direction; and a second extending portion extending towards a first insulator side from the second base portion, wherein a gap is formed between the first extending portion and the second extending portion and
the gap is positioned at a first base portion side or a second base portion side from a middle position of a length of the stator core in the axial direction and is positioned at a portion of the coil winding where a curvature thereat is larger than a curvature at the middle position of the stator coil.

2. The rotating electrical machine for a vehicle according to claim 1, wherein the gap is arranged at a position closer to the first base portion or the second base portion than the middle position.

3. The rotating electrical machine for a vehicle according to claim 1 or 2, wherein the portion of the coil winding where the curvature thereat is larger than the curvature at the middle position forms an arc shaped portion of the coil winding to be in contact with a first joint portion between the first base portion and the first extending portion or a second joint portion between the second base portion and the second extending portion.

4. The rotating electrical machine for a vehicle according to any one of claims 1 through 3, wherein a sum of a length of the first extending portion in the axial direction overlapped with the stator core and a length of the second extending portion in the axial direction overlapped with the stator core is formed to be shorter than the length of the stator core in the axial direction.

5. The rotating electrical machine for a vehicle according to any one of claims 1 through 4, wherein the first insulator includes two first extending portions,
the second insulator includes two second extending portions;
one of the two first extending portions is longer than the other of the two first extending portions; and
one of the two second extending portions facing to the one of the two first extending portions is shorter than the other of the two second extending portions facing to the other of the two first extending portions.

6. The rotating electrical machine for a vehicle according to any one of claims 1 through 5, wherein the shape of the first insulator is identical with the shape of the second insulator.
